(19) Europäisches Patentamt
European Patent Office
Office européen des brevets

(11) **EP 3 582 975 B1**

(12) **EUROPÄISCHE PATENTSCHRIFT**

(45) Veröffentlichungstag und Bekanntmachung des Hinweises auf die Patenterteilung:
**01.11.2023 Patentblatt 2023/44**

(21) Anmeldenummer: **18706972.9**

(22) Anmeldetag: **12.02.2018**

(51) Internationale Patentklassifikation (IPC):
**B60B 9/12** *(2006.01)* **B60B 17/00** *(2006.01)*
**B60B 9/10** *(2006.01)*

(52) Gemeinsame Patentklassifikation (CPC):
**B60B 9/12; B60B 9/10; B60B 17/0024;
B60B 17/0041;** B60B 17/0017; B60B 2900/131;
B60B 2900/133

(86) Internationale Anmeldenummer:
**PCT/EP2018/053376**

(87) Internationale Veröffentlichungsnummer:
**WO 2018/149766 (23.08.2018 Gazette 2018/34)**

(54) **SCHIENENRAD UND ELASTISCHER KÖRPER FÜR EIN SOLCHES SCHIENENRAD**

TRACK WHEEL AND ELASTIC BODY FOR A TRACK WHEEL OF THIS TYPE

ROUE FERROVIAIRE ET CORPS ÉLASTIQUE POUR UNE TELLE ROUE FERROVIAIRE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **15.02.2017 DE 102017103015**

(43) Veröffentlichungstag der Anmeldung:
**25.12.2019 Patentblatt 2019/52**

(73) Patentinhaber: **Bochumer Verein Verkehrstechnik
GmbH
44793 Bochum (DE)**

(72) Erfinder:
• **MURAWA, Franz
44805 Bochum (DE)**
• **SCHULZ, Torben
42579 Heiligenhaus (DE)**

(74) Vertreter: **Cohausz & Florack
Patent- & Rechtsanwälte
Partnerschaftsgesellschaft mbB
Bleichstraße 14
40211 Düsseldorf (DE)**

(56) Entgegenhaltungen:
EP-A1- 2 357 092    EP-A1- 2 881 260
WO-A1-2014/202455    DE-A1- 3 328 321
DE-A1- 19 743 893    DE-A1-102014 222 072
DE-B- 1 206 006

**Beschreibung**

Die Erfindung betrifft ein mehrteiliges Schienenrad mit einem Radreifen, mit einer Radfelge und mit mindestens zwei zwischen dem Radreifen und der Radfelge angeordneten elastischen Körpern, über die der Radreifen federnd elastisch auf der Radfelge abgestützt ist und die in Umfangsrichtung um die Drehachse des Schienenrads verteilt angeordnet sind, wobei die elastischen Körper zwischen einer Innenumfangsfläche des Radreifens und einer Außenumfangsfläche der Radfelge eingespannt sind und dabei mit ihrer dem Radreifen zugeordneten Außenseite an der Innenumfangsfläche des Radreifens und mit ihrer der Radfelge zugeordneten Innenseite an der Außenumfangsfläche der Radfelge anliegen. Ein derartiges mehrteiliges Schienenrad ist aus der DE 10 2014 222 072 A1 bekannt.

Elastisch gefederte Schienenräder, in der Fachsprach oft auch als "gummigefederte" Schienenräder bezeichnet, sind in unterschiedlichen Bauformen bekannt.

Die so genannte Einring-Ausführung solcher Schienenräder, bei der zwischen dem Radreifen und der Radfelge ein die Federung bildender Ring aus Gummielementen angeordnet ist, ist beispielsweise in der DE 829 603 C und der DE 33 28 321 A1 beschrieben. Bei diesen Schienenrädern werden die Gummielemente bei der radial auf das Rad einwirkenden Radaufstandskraft im Bereich der Krafteinleitung vorwiegend auf Druck beansprucht. Diese Druckbeanspruchung überlagert sich der Druckbeanspruchung der Gummielemente welche während des Zusammenbaus erzeugt werden.

Ein anderes gummigefedertes Schienenrad ist beispielsweise aus der EP 0 733 493 B1 bekannt. Dieses bekannte Schienenrad ist aus einem aus Stahl geschmiedeten bzw. gewalzten Radreifen und einem aus einer Aluminiumlegierung oder einem anderen Leichtmetallwerkstoff hergestellten Radkörper gebaut, welcher die Radnabe umfasst, über die das Schienenrad im Gebrauch auf der Achse des jeweiligen Schienenfahrzeugs gelagert ist. In dem Radreifen sind Aussparungen und in der Radfelge Nuten zum Einlegen von Gummiringen zwischen dem Radreifen und dem Umfang des Radkörpers vorgesehen. Die Gummiringe bilden einen elastischen Körper über, die der Radreifen elastisch auf der am Umfang des Radkörpers gebildeten Radfelge abgestützt ist. Durch einen als Spannelement vorgesehenen keilförmigen Spannring sind die Gummiringe zwischen dem Radkörper und dem Radreifen verspannt. Zu diesem Zweck ist von der einen Stirnseite des Radkörpers her ein an deren Außenumfang umlaufender Umfangsabsatz ausgebildet, auf den der Spannring aufgeschoben ist. Über seinen Umfang verteilte, als Spannmittel dienende Befestigungsschrauben ziehen den Spannring gegen einen an der gegenüberliegenden Stirnseite umlaufenden Umfangsabschnitt der Radfelge. Die Befestigungsschrauben greifen dazu an dem Radkörper an, indem sie achsparallel zur Drehachse des Schienenrads ausgerichtet durch in den Spannring eingeformte Durchgangsöffnungen geführt und in Gewindeöffnungen eingeschraubt sind, die in den Umfangsabschnitt des Radkörpers eingeformt sind.

Unabhängig von der jeweils konkreten Ausführung der Schienenräder ist eine hohe Vorspannung der Gummikörper (Druckbeanspruchung) im Einbauzustand notwendig, um die im praktischen Gebrauch während des Fahrbetriebs auftretenden Antriebs- und Bremsmomente sicher, d.h. ohne Rutschbewegungen zwischen den Gummielementen und dem Radreifen oder der Radfelge des Schienenrads, zu übertragen.

Zu beachten ist dabei, dass bei konventionellen Schienenrädern der hier in Rede stehende Art die als elastische Körper zwischen Radreifen und Radfelge eingesetzten Gummielemente die im Gebrauch auftretenden Momente ausschließlich über Kraftschluss, d.h. ausschließlich über Reibung, zwischen den elastischen Elementen und der zugeordneten Außenumfangsfläche der Radfelge und der Innenumfangsfläche des Radreifens übertragen.

Gleichzeitig wird ein Anteil der Vorspannung der elastischen Körper benötigt, um die Kriech- und Setzungserscheinungen der Gummielemente während ihres mehrjährigen Betriebseinsatzes zu kompensieren. Die insgesamt erforderliche Vorspannung der Gummielemente beträgt erfahrungsgemäß zwischen 20 und 35 % der Gesamthöhe der betreffenden elastischen Körper, wenn "n" Einzelkörper über dem Umfang der Radfelge angeordnet sind und im nicht vorgespannten Zustand eine in Umfangsrichtung gemessene Breite zwischen 40 und 70 mm aufweisen. Je nach Durchmesser des Rades, der Breite der eingesetzten elastischen Körper (Gummielemente) und des üblicherweise vorgesehenen Abstandes zwischen den elastischen Körpern werden deshalb bei in Nahverkehrs-Schienenfahrzeugen üblichen Raddurchmessern von 400 - 800 mm 9 - 34 über den Umfang angeordnete elastische Körper benötigt.

Allerdings wird durch die bei konventionellen Schienenrädern benötigte Vorspannung der elastischen Körper die radiale Federsteifigkeit des Rades stark beeinflusst. Eine hohe Vorspannung führt demnach dazu, dass auch die radiale Steifigkeit des Rades ansteigt. Bei konventionellen gummigefederten Schienenrädern der hier in Rede stehenden Art liegt die radiale Federsteifigkeit dementsprechend im Bereich von 80 - 240 kN/mm.

Aus Komfortgründen wird aber eine möglichst geringe radiale Steifigkeit des Rades gewünscht. Auf diese Weise wird ein optimales Dämpfungsverhalten der Schienenräder erreicht. Um dies zu erreichen, sind verschiedene Radkonstruktionen in der so genannten Zweiring-Ausführung vorgeschlagen worden, wie sie beispielsweise in der US 2,328,660 A oder der EP 1 896 274 B1 beschrieben sind. Derart gestaltete Schienenräder weisen Federsteifigkeiten von 15 bis 30 kN/mm auf. Allerdings benötigen sie bei gleicher Belastungsfähigkeit einen erheblich größeren Bauraum für die Gummifederung als Schienenräder in den Einring-Ausführungen.

Bei einer Variante des aus der eingangs schon erwähnten DE 10 2014 222 072 A1 bekannten Schienenrads sind an den axialen Stirnseiten der elastischen Körper Stege ausgebildet. Diese sollen dazu dienen, die elastischen Körper drehfest an die Radfelge oder den Radreifen des Schienenrads anzukoppeln. Hierzu greifen die Stege in Nuten, die in jeweils einen Kragen eingeformt sind, der an der Stirnseite der Radfelge oder des Radreifens umläuft. Auch auf diese Weise soll es möglich sein, die Steifigkeit der elastischen Elemente in radialer Richtung zu vermindern, um durch die dadurch gewonnene höhere Elastizität das Federungsverhalten und damit den durch das Schienenrad gewonnenen Komfort zu verbessern.

Vor dem Hintergrund dieses Standes der Technik hat sich die Aufgabe ergeben, ein nach dem Einring-Konzept gestaltetes Schienenrad mit dem Potenzial für eine optimiert niedrige Federkonstante zu schaffen.

Die Erfindung hat diese Aufgabe durch ein Schienenrad gelöst, das mindestens die in Anspruch 1 angegebenen Merkmale aufweist.

Ein erfindungsgemäßes mehrteiliges Schienenrad weist demnach einen Radreifen, eine Radfelge und mindestens zwei zwischen dem Radreifen und der Radfelge angeordnete elastische Körper auf, über die der Radreifen federnd elastisch auf der Radfelge abgestützt ist und die in Umfangsrichtung um die Drehachse des Schienenrads verteilt angeordnet sind, wobei die elastischen Körper zwischen einer Innenumfangsfläche des Radreifens und einer Außenumfangsfläche der Radfelge eingespannt sind und dabei mit ihrer dem Radreifen zugeordneten Außenseite an der Innenumfangsfläche des Radreifens und mit ihrer der Radfelge zugeordneten Innenseite an der Außenumfangsfläche der Radfelge anliegen. Erfindungsgemäß sind dabei die elastischen Körper gegen eine Bewegung in Umfangsrichtung durch an der Innenumfangsfläche des Radreifens und/oder an der Außenumfangsfläche der Radfelge jeweils vorgesehene Formelemente gesperrt.

Ein zur Verwendung in einem erfindungsgemäßen Schienenrad, das einen Radreifen und eine Radfelge sowie mindestens zwei elastische Körper umfasst, über die der Radreifen federnd elastisch auf der Radfelge abgestützt ist, vorgesehener elastischer Körper weist dabei eine blockartige Grundform mit endseitigen Stirnseiten, von denen jeweils eine einer der Stirnseiten des Schienenrads zugeordnet ist, Längsseiten, die sich seitlich zwischen den Stirnseiten erstrecken, eine dem Radreifen zugeordnete, sich ebenfalls zwischen den Stirnseiten erstreckende und an ihren Längskanten mit den Längsseiten zusammentreffende Außenseite sowie eine zur Außenseite gegenüberliegende Innenseite auf, die der Radfelge des Schienenrads zugeordnet ist. Erfindungsgemäß ist dabei der elastische Körper an seiner dem Radreifen zugeordneten Außenseite mit einem Formelement versehen, das dazu vorgesehen ist, mit einem korrespondierend geformten Formteil an der Innenumfangsfläche des Radreifens formschlüssig zusammenzuwirken.

Mit der erfindungsgemäßen Ausgestaltung eines Schienenrads gelingt eine platzsparende Bauweise eines Schienenrads nach der Einringrad-Bauart, wobei dieser Erfolg unabhängig davon ist, ob das Schienenrad lediglich einen Radreifen und eine Radfelge umfasst, zwischen denen die jeweiligen elastischen Körper gespannt sind ("zweiteilige Ausführung"), oder ob zusätzlich zu Radreifen und Radfelge ein separates Spannelement vorgesehen ist, um die elastischen Körper gezielt zu spannen (dreiteilige Ausführung). Dabei ist dadurch, dass bei einem erfindungsgemäßen Schienenrad die Bewegung der elastischen Körper in Umfangsrichtung durch eine formschlüssige Anbindung der elastischen Körper mindestens an den Radreifen gesperrt ist, die in radialer Richtung wirkende Pressung, die zum Fixieren der elastischen Körper zwischen Radreifen und -felge benötigt wird, gegenüber konventionellen Schienenrädern deutlich reduziert. Gleichzeitig ist die Funktionssicherheit der erfindungsgemäßen Räder im Hinblick auf die Federeigenschaften in axialer und tangentialer Richtung konventioneller Schienenräder mindestens ebenbürtig.

Anders als bei den Schienenrädern, bei denen die Anbindung des Radreifens an die Radfelge ausschließlich mittels Kraftschlusses über die zwischen Radreifen und Radfelge angeordneten elastischen Körper erfolgt und bei denen die elastischen Körper entsprechend hoch komprimiert werden müssen, sind bei einer erfindungsgemäßen Ausgestaltung eines elastisch gefederten Schienenrades die Vorspannung der elastischen Körper, der unvermeidbar zur Kompensation der Kriech- und Setzungserscheinungen benötigt wird, und die Maßnahmen, welche zur Übertragbarkeit der im Betriebseinsatz auftretenden Beanspruchungen in Umfangsrichtung notwendig sind, funktional getrennt.

So werden die im Fahrbetrieb in Umfangsrichtung wirkenden Kräfte im Wesentlichen durch eine formschlüssige, mindestens in Umfangsrichtung wirkende Verbindung zwischen dem Radreifen und den elastischen Körpern einerseits oder der Radfelge und den elastischen Körpern andererseits übertragen. Hierzu sind bei einem erfindungsgemäßen Rad an dem Radreifen oder der Radfelge sowie den elastischen Körpern geeignete Formelemente vorgesehen. Auf diese Weise wird in Umfangsrichtung ein Formschluss zwischen den Gummielementen und den umgebenden, aus metallischen Werkstoffen bestehenden Komponenten erzeugt, mit dem die sichere Übernahme aller auftretenden Beanspruchungen im Betriebseinsatz gewährleistet ist.

Bei einem erfindungsgemäßen Schienenrad ist eine Vorspannung der elastischen Körper somit nur noch erforderlich, um die unvermeidbaren Kriech- und Setzungserscheinungen mit einem ausreichenden Sicherheitszuschlag zu kompensieren. Durch die gegenüber konventionellen Schienenrädern auf diese Weise deutlich reduzierte Vorspannung ist bei einem erfindungsgemäßen Schienenrad die radiale Einfederung unter der Radaufstandskraft entsprechend deutlich erhöht. Es zeigt sich hier, dass bei im Übrigen gleicher Bauart für die radiale Federsteifigkeiten $c_{rad,neu}$ der erfindungsgemäßen Radausführungen im Verhältnis zu den Federsteifigkeiten $c_{rad,Standard}$ der konventionellen Radausführungen gilt:

$$c_{rad,neu} = 0,4 \ldots 0,8\ c_{rad,Standard}$$

Dabei sind die elastischen Körper in einem erfindungsgemäßen Schienenrad gegenüber dem unverformten Neuzustand typischerweise um einen Betrag Hv komprimiert, der 0,07 - 0,29 ihrer Höhe HgK im unverformten Neuzustand entspricht. Somit ist die Höhe HvK der elastischen Körper im zwischen Radreifen und Radfelge eingespannten Zustand um 7 - 29 % geringer als ihre Höhe Hgk im vollständig entlasteten Neuzustand (Hv = 0,07 ... 0,29 HgK).

Grundsätzlich sind für die erfindungsgemäßen Zwecke sämtliche an der Innenumfangsfläche des Radreifens eines erfindungsgemäßen Schienenrads ausgebildete Formelemente geeignet, die sich einer Bewegung der elastischen Körper in Umfangsrichtung in den Weg stellen können. Dies können Vertiefungen sein, in die das Material der elastischen Körper aufgrund der notwendigen Vorspannung der elastischen Körper eingepresst wird oder es können Vorsprünge sein, gegen die die elastischen Körper in Umfangsrichtung abgestützt sind.

Als besonders wirksam hat es sich in dieser Hinsicht erwiesen, wenn eine Anzahl der elastischen Körper an ihrer Außenseite oder Innenseite mindestens ein Formelement aufweisen, das mindestens in Umfangsrichtung formschlüssig mit einem der an der Innenumfangsfläche des Radreifens oder der Außenumfangsseite der Radfelge vorhandenen Formelemente zusammenwirkt. Durch die aneinander angepasste Formgebung der formschlüssig zusammenwirkenden Formelemente und der damit versehenen elastischen Körper und Radfelge oder Radreifen wird eine optimal sichere formschlüssige Abstützung der elastischen Körper und damit eine maximale Sicherheit gegen eine Verschiebung der elastischen Körper unter der Last der im Fahrbetrieb auftretenden Kräfte erzielt.

Dabei ist es im Hinblick auf eine optimal verschiebesicher Anbindung des Radreifens an die Radfelge zwar vorteilhaft, aber nicht zwingend erforderlich, dass alle elastischen Körper jeweils mit einem Formelement ausgestattet sind, das mit einem korrespondierend geformten Formelement am Radreifen oder an der Radfelge zusammenwirkt. Vielmehr kann - in Umfangsrichtung betrachtet - zwischen zwei mit einem zum formschlüssigen Zusammenwirken mit einem an der Innenumfangsfläche der Radfelge oder der Außenumfangsfläche des Radreifens vorgesehenen Formelement versehenen elastischen Körpern jeweils mindestens ein elastischer Körper angeordnet sein, bei dem ein solches Formelement fehlt. Hier zeigt sich, dass schon dann, wenn mindestens 20 % der elastischen Körper eines erfindungsgemäßen Schienenrads in der erfindungsgemäßen Weise über miteinander zusammenwirkende Formelemente an dem Radreifen oder der Radfelge abgestützt sind, eine bleibende Relativrotation zwischen Radreifen und Radfelge verhindert werden kann. So sollten bei Schienenrädern mit neun elastischen Körpern mindestens zwei Körper und bei einem Schienenrad mit 34 elastischen Körpern mindestens sieben elastische Körper in der erfindungsgemäßen Weise an den Radreifen oder die Radfelge angebunden sein, wobei es sich dabei von selbst versteht, dass die entsprechend angebundenen Körper optimaler Weise in gleichmäßigen Winkelabständen um die Drehachse des Schienenrads verteilt angeordnet sind.

Eine besonders wirksame Anbindung des Radreifens an die elastischen Körper und über diese an die Radfelge ergibt sich dann, wenn die an der Innenfläche des Radreifens vorgesehenen Formelemente in die Innenumfangsfläche eingeformte Ausnehmungen und jeweils mindestens ein formschlüssig mit einer dieser Ausnehmungen zusammenwirkender Vorsprung als Formelement an der Außenseite der mit einem solchen Formelement versehenen elastischen Körper vorhanden ist. Durch diese aneinander angepasste Formgebung der für den Formschluss vorgesehenen Formelemente ist eine optimal formschlüssige Anbindung der mit dem Formelement versehenen Körper an den Radreifen gewährleistet.

Die am erfindungsgemäßen elastischen Körper vorgesehenen, mit jeweils einer Ausnehmung an der Innenumfangsfläche des Radreifens zusammenwirkenden Formelemente können dabei beispielsweise einen kreis-, parabel-, dreieck-, trapez- oder kurvenförmigen Querschnitt aufweisen, wobei es sich im Hinblick auf die Herstellung der korrespondierend geformten Ausnehmungen an der Innenumfangsfläche des Radreifens als vorteilhaft herausgestellt hat, wenn die Querschnittsform auf einer rotationssymmetrischen Figur, also einer Kreisform, einer Ellipse oder desgleichen basiert.

Die Ausnehmung an der Innenumfangsfläche des Radreifens und das zugeordnete Formelement an der Außenseite des jeweiligen elastischen Körpers sollten dabei so dimensioniert sein, dass bei noch ungespanntem elastischen Körper in Umfangsrichtung zwischen den Innenflächen der Aufnahme und dem Formelement an der Außenseite des elastischen Körpers ein gewisses Spiel vorhanden ist. Der durch dieses Spiel gebildete Freiraum wird beim Verspannen mit Material des elastischen Körpers gefüllt. Durch das zuvor vorhandene Spiel wird so das Entstehen von lokalen Maximalbelastungen vermieden, die zu einer vorzeitigen Materialermüdung führen könnten.

Bei der halbkreisförmigen Querschnittsgestaltung des am elastischen Körper vorgesehenen Formelements und der zugeordneten, an der Innenumfangsfläche des Radreifens ausgebildeten Ausnehmung können der Querschnittsradius rH des Formelements und der Querschnittsradius rA der Ausnehmung beispielsweise wie folgt aufeinander abgestimmt werden:

$$rH = 0{,}75 \ldots 0{,}98 \; rA$$

Zur verdrehsicheren Anbindung der elastischen Körper an die Radfelge können an der Außenumfangsfläche der Radfelge Sitzflächen für die elastischen Körper ausgebildet sein.

Diese Sitzflächen können eben ausgebildet sein, so dass bei dieser Ausgestaltung die Außenumfangsfläche der Radfelge ein Vieleck mit einer der Zahl der vorgesehenen elastischen Körper entsprechenden Anzahl von Seitenflächen aufweist.

Der verschiebesichere Sitz der elastischen Körper auf der Außenumfangsfläche der Radfelge kann jedoch auch dadurch unterstützt werden, dass die Sitzflächen in in die Außenumfangsfläche der Radfelge eingeformten Vertiefungen ausgebildet sind. In diese Vertiefungen setzt sich das Material der elastischen Körper, so dass im Zuge der Montage der elastischen Körper und ihrer damit einhergehenden Vorspannung sich eine formschlüssige Anbindung der Körper an die Radfelge einstellt. Unterstützt werden kann dies dadurch, dass die Vertiefungen durch Seitenflächen begrenzt sind, die ein räumliches Polygon bilden und gemeinsam die jeweilige Sitzfläche bilden. Dabei hat es sich für die Dauerhaltbarkeit der elastischen Körper als günstig herausgestellt, wenn die die Vertiefungen begrenzenden Seitenflächen eingewölbt sind.

Unabhängig davon, welche Formgebung die für die elastischen Körper an der Außenumfangsfläche der Radfelge vorgesehenen Sitzflächen erhalten, kann eine Verschiebung der elastischen Körper in Umfangsrichtung auf der Radfelge besonders wirksam auch dadurch verhindert werden, dass die Sitzflächen durch Stege begrenzt sind, die achsparallel zur Drehachse des Schienenrads ausgerichtet sind.

Dabei können die Stege einstückig an der Radfelge ausgeformt sein, d.h. in einem Stück mit der Felge aus dem Material gefertigt sein, aus dem die Felge besteht. Hierzu kann beispielsweise jedes geeignete urformgebende oder spanabhebende Verfahren angewendet werden. Alternativ oder ergänzend ist es genauso möglich, die die Sitzflächen in Umfangsrichtung begrenzenden Stege separat vorzufertigen und mittels geeigneter Verbindungstechniken, wie Schrauben, Nieten, Clinchen, Schweißen, Löten, Schrumpfen, Kleben, an der Außenumfangsfläche der Radfelge zu befestigen.

Alternativ zu einer Befestigung unmittelbar an der Innenumfangsfläche ist es auch möglich, die Stege durch an der Radfelge gehaltene Begrenzungselemente zu bilden. Bei diesen Begrenzungselementen kann es sich um Stifte oder Bolzen handeln, die beispielsweise an stirnseitig umlaufenden Schultern der Radfelge gehalten sind. Zu diesem Zweck können an den betreffenden Schultern gegenüberliegend zueinander angeordnete Aufnahmen, beispielsweise Durchgangsöffnungen, vorgesehen sein, durch die die Begrenzungselemente gesteckt werden. Die Begrenzungselemente sind dabei optimaler Weise so geformt, dass sie durch in ihrer Umfangsrichtung wirkenden Formschluss verdrehsicher in der jeweiligen Aufnahme gehalten sind. Hierzu können die Begrenzungselemente zumindest in dem Bereich, in dem sie mit der jeweiligen Aufnahme in Eingriff kommen, eine von einem Kreis abweichende Querschnittsform aufweisen. Ebenso sollten die Begrenzungselemente so angeordnet oder geformt sein, dass die abrasive Belastung der mit ihnen in Kontakt kommenden elastischen Körper minimiert ist. Hierzu können die Kontaktflächen der Begrenzungselemente gewölbt ausgebildet und - soweit vorhanden - die Kanten zwischen den Flächen der Begrenzungselemente abgerundet sein.

Die Anordnung der Begrenzungselemente kann gleichmäßig zwischen allen elastischen Körpern oder auch in reduzierter Anzahl erfolgen, wobei die Anzahl der Begrenzungselemente mindestens drei betragen sollte. Ebenso erweist es sich in diesem Fall als vorteilhaft, die Begrenzungselemente in regelmäßigen Winkelabständen um die Drehachse des Schienenrads verteilt anzuordnen.

Auch in Bezug auf die Ausgestaltung der an der Außenumfangsfläche der Radfelge vorgesehenen Sitzflächen gilt, dass nicht jede der Sitzflächen so ausgebildet sein muss, dass es notwendig zu einem in Umfangsrichtung des Schienenrades wirkenden Formschluss kommt. Vielmehr kann es ausreichen, wenn die Anzahl der durch Stege in Umfangsrichtung begrenzten Sitzflächen mindestens 20 % der Anzahl der beim jeweiligen erfindungsgemäßen Schienenrad vorgesehen elastischen Körper entspricht, wobei optimaler Weise jedem elastischen Körper, der über ein entsprechend geformtes Formelement formschlüssig an die Innenumfangsfläche des Radreifens angebunden ist, eine durch Stege umfangsseitig begrenzte Sitzfläche zugeordnet ist.

Optimale Federeigenschaften ergeben sich, wenn die bei einem erfindungsgemäßen Schienenrad zum Einsatz kommenden elastischen Körper aus einem Elastomerwerkstoff mit einer Shorehärte von 65 bis 89 ShA bestehen. Derartige Elastomerwerkstoffe sind aus dem Bereich der Fertigung von elastischen Körpern ("Gummielemente") für den Bau von konventionellen Schienenrädern der eingangs erläuterten Art hinlänglich bekannt. Geeignete Werkstoffe bestehen z.B. aus Naturkautschuk (NR), Ethylen-Proplyen-Kautschuk (EPDM), Chloropren-Kautschuk (CR) oder hydriertem NitrilKautschuk (HNBR).

Ein erfindungsgemäßer, insbesondere zur Verwendung in einem erfindungsgemäßen Schienenrad vorgesehener elastischer Körper ist mit dem an seiner der Innenumfangsfläche des Radreifens zugeordneten Außenseite ausgebildeten Formelement so geformt, dass er eine sichere Übertragung der im Betrieb auftretenden Kräfte zwischen Radreifen und Gummielementen durch den Formschluss ermöglicht, indem er im zum Gebrauch montierten Zustand in entsprechend geformte Ausnehmungen in der Innenumfangsfläche des Radreifens greift.

Insbesondere bei Radreifen, deren Innenumfangsfläche nicht konstant achsparallel um die Drehachse des Schienenrads umläuft, sondern die im Längsschnitt achsparallel zur Drehachse des Schienenrads betrachtet beispielsweise eine Dreiecksform mit in Richtung der Mitte der Innenumfangsfläche und in Richtung der Drehachse aufeinander spitzdachartig aufeinander zulaufenden Flächenabschnitten ausgebildet ist oder einen in anderer Weise geformten, um die Drehachse des Schienenrads mindestens abschnittsweise umlaufenden Absatz aufweist, hat es sich dabei als besonders günstig erwiesen, wenn der elastische Körper an seinen jeweils achsparallel zur Drehachse des Schienenrads ausgerichteten Achsrichtung betrachtet gegenüberliegenden Enden jeweils einen Endabschnitt aufweist und zwischen den Endabschnitten in die Außenseite des elastischen Körpers ein Tal eingeformt ist, auf dessen Grund ein das Formelement des elastischen Körpers bildende Vorsprung errichtet ist. Bei derart ausgebildeten elastischen Körpern reicht es aus, wenn die jeweilige mit dem Vorsprung des elastischen Körpers zusammenwirkende Ausnehmung der Innenumfangsfläche des Radreifens im in Richtung der Drehachse vorstehenden Bereich der Innenumfangsfläche eingeformt ist und in axialer Richtung in die umlaufenden, stirnseitigen Randbereiche der Innenumfangsfläche ausläuft. Bei zum Gebrauch fertig im Schienenrad montiertem elastischen Körper erfolgt dann die formschlüssige Anbindung über den in die jeweilige Ausnehmung an der Innenumfangsfläche des Radreifens greifenden Vorsprung, während gleichzeitig die Endabschnitte des elastischen Körpers gegen den jeweiligen Randbereich der Innenumfangsfläche abgestützt und den in Richtung der Drehachse vorstehenden Abschnitt der Innenumfangsfläche zwischen sich aufnehmen. Auf diese Weise lässt sich über die elastischen Körper nicht nur eine Sicherung gegen eine Relativverdrehung von Radreifen und Radfelge in Umfangsrichtung erzielen, sondern in gleicher Weise effektiv verhindern, dass sich Radreifen und Radfelge im Gebrauch in axialer Richtung gegeneinander verschieben. Abhängig von der Formgebung der Innenumfangsfläche des Radreifens oder der an ihr ausgebildeten, mit dem Vorsprung des erfindungsgemäßen elastischen Körpers zusammenwirkenden Ausnehmung kann es sich dabei im Hinblick auf eine Maximierung der zum Übertragen der im Gebrauch auftretenden Belastungen als zweckmäßig erweisen, wenn sich der Vorsprung in Achsrichtung zwischen den Endabschnitten des jeweiligen elastischen Körpers erstreckt. Aus den oben schon erläuterten Gründen erweist es sich dabei als besonders günstig, wenn der Vorsprung in einem Schnitt quer zur Achsrichtung betrachtet halbkreisförmig ausgebildet ist. Einer Kerbwirkung im Bereich des Übergangs von den Endabschnitten zum Vorsprung oder Tal des elastischen Körpers kann hier dadurch wirksam entgegengewirkt werden, dass die Hänge, mit denen die Endabschnitte in das zwischen ihnen begrenzte Tal übergehen, kontinuierlich sprungfrei gekrümmt sind.

Um ihre notwendige Vorspannung im fertig montierten erfindungsgemäßen Schienenrad zu erzielen, werden erfindungsgemäße elastische Körper bei der Montage, wie oben erläutert, unvermeidbar in radialer Richtung des Schienenrads, d.h. in Richtung ihrer Höhe, komprimiert. Der Gefahr, dass sich in Folge dieser Kompression eine seitlich ballig ausgewölbte Form der elastischen Körper einstellt, die ihre Federwirkung beeinträchtigen könnte, kann dadurch entgegen gewirkt werden, dass die Längsseiten der elastischen Körper im unbelasteten Neuzustand eingewölbt sind.

Die hier beschriebenen Gestaltungsmöglichkeiten erfindungsgemäßer Schienenräder und elastischer Körper zur Verwendung in solchen Schienenrädern lassen sich bei allen bekannten Schienenradbauarten der Einring-Ausführungen umsetzen und führen dort jeweils zu einer wesentlichen Erhöhung der Komforteigenschaften der Räder.

Nachfolgend wird die Erfindung anhand einer Ausführungsbeispiele darstellenden Zeichnung näher erläutert. Es zeigen jeweils schematisch:

Fig. 1    ein Schienenrad in frontaler Ansicht;

Fig. 2    einen ersten elastischen Körper in perspektivischer Ansicht von oben;

Fig. 3    einen zweiten elastischen Körper in perspektivischer Ansicht von oben;

Fig. 4a    den elastischen Körper gemäß Fig. 3 in einem Schnitt entlang der in Fig. 3 eingezeichneten Schnittlinie A-A;

Fig. 4b    den elastischen Körper gemäß Fig. 3 in einer seitlichen Ansicht;

Fig. 4c    den elastischen Körper gemäß Fig. 3 in Draufsicht von oben;

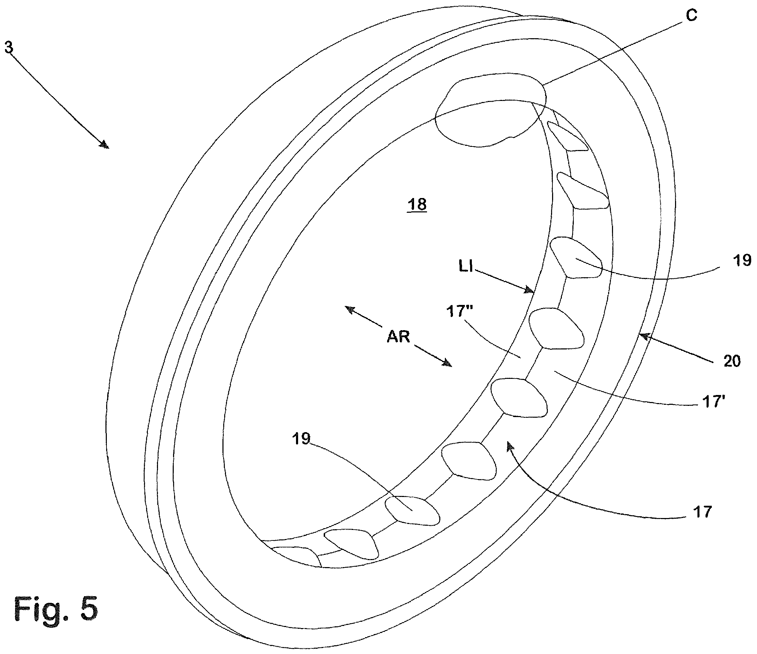

Fig. 5    einen Radreifen des in Fig. 1 dargestellten Schienenrads in perspektivischer Ansicht;

Fig. 6    den elastischen Körper gemäß Fig. 2 in einem Schnitt entlang der in Fig. 2 eingezeichneten Schnittlinie B-B;

Fig. 7    einen teilweise aufgebrochenen Ausschnitt C des in Fig. 5 dargestellten Radreifens in einer frontalen Ansicht;

Fig. 8    den elastischen Körper gemäß Fig. 2 im unkomprimierten Neuzustand (durchgezogene Linien) und im komprimierten Einbauzustand (gestrichelte Linien) jeweils in seitlicher Ansicht;

Fig. 9a - 9c    Varianten von Radfelgen des in Fig. 1 dargestellten Schienenrads jeweils in perspektivischer Ansicht;

Fig. 10a - 10d    Ausschnitte von verschiedenen Schienenrädern in konventionellen Bauformen jeweils in einem Längsschnitt;

Fig. 11	einen Ausschnitt einer Radfelge in einem Längsschnitt;

Fig. 12	Querschnittsformen von Begrenzungselementen.

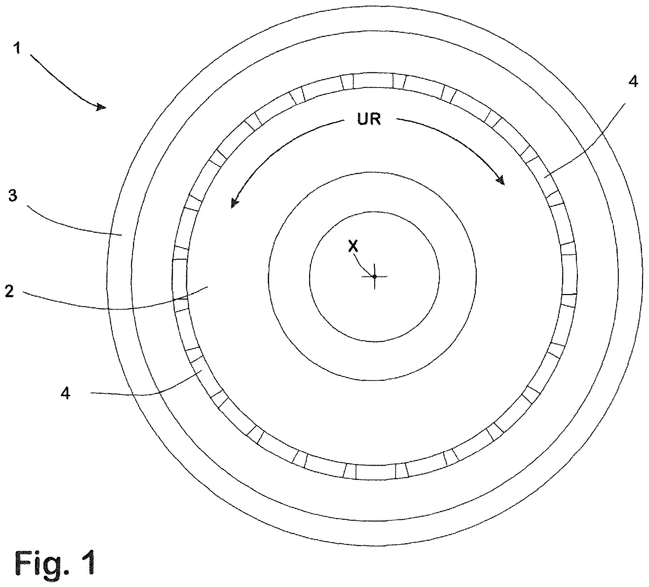

Das in Fig. 1 dargestellte Schienenrad 1 umfasst eine Radfelge 2 und einen Radreifen 3, der über zwischen der Radfelge 2 und dem Radreifen 3 angeordnete elastische Körper 4 abgestützt ist. Die elastischen Körper 4 sind dazu in gleichmäßigen Winkelabständen um die zentrale Drehachse X des Schienenrads 1 verteilt in dem zwischen der Radfelge 2 und dem Radreifen 3 vorhandenen Spalt angeordnet.

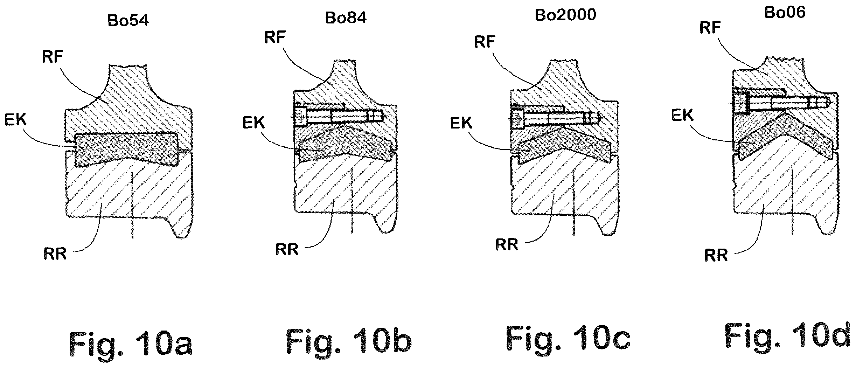

Der Grundaufbau des Schienenrads 1 entspricht dabei dem "zweiteiligen" Aufbau eines unter der Bezeichnung "BO54" bekannten, von der Anmelderin angebotenen Schienenrads, dessen Längsschnitt ausschnittsweise in Fig. 10a dargestellt ist. Die elastischen Körper EK sind dort zwischen den Radreifen RR und die Radfelge RF gepresst, so dass der Radreifen RR in Umfangsrichtung UR durch die in radialer Richtung RR wirkenden Druckkräfte kraftschlüssig auf der Radfelge RF fixiert ist. Gleichzeitig sind die elastischen Körper EK in axialer AR Richtung durch eine jeweils um den jeweiligen stirnseitigen Rand der Radfelge RF umlaufende Schulter 30,31 gegen eine Verschiebung gesichert. Bei den drei anderen in den Figuren 10b, 10c und 10d gezeigten bekannten, ebenfalls von der Anmelderin angebotenen Schienenrädern "BO84", "BO2000" und "BO06" handelt es sich um Varianten von dreiteiligen Schienenrädern, bei denen neben dem Radreifen und der Radfelge als drittes aus Metall bestehendes Element ein Spannring zum Verspannen der den Radreifen auf der Radfelge abstützenden elastischen Körper vorgesehen ist. Die radiale Federsteifigkeit beträgt bei dem Schienenrad BO54 etwa 80 kN/mm, bei dem Schienenrad BO84 etwa 100 kN/mm, bei dem Schienenrad BO2000 etwa 200 kN/mm und bei dem Schienenrad BO06 etwa 240 kN/mm.

Die elastischen Körper 4 bestehen aus einem für diese Zwecke in der Praxis bewährten Elastomerwerkstoff z.B. aus Naturkautschuk (NR) mit einer Shorehärte von 65 - 88 ShA und sind jeweils in einem Stück geformt.

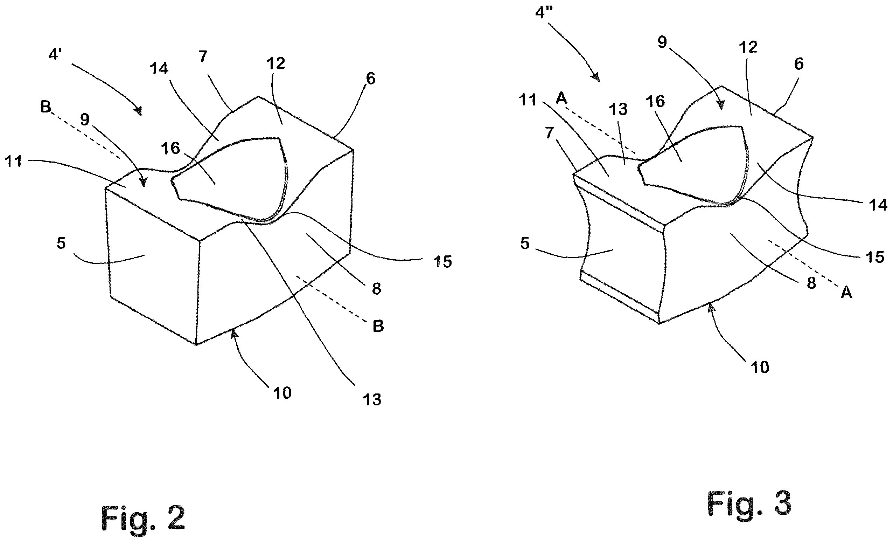

Wie für ihre beiden in den Figuren 2 und 3 gezeigten Varianten 4' und 4" dargestellt, weisen die elastischen Körper 4 jeweils eine quaderförmige Grundform mit zwei einander gegenüberliegenden endseitigen Stirnseiten 5,6, von denen jeweils eine einer der Stirnseiten des Schienenrads 1 zugeordnet ist, mit zwei Längsseiten 7,8, die sich seitlich zwischen den Stirnseiten 5,6 erstrecken, mit einer dem Radreifen 3 zugeordneten, sich ebenfalls zwischen den Stirnseiten 5,6 erstreckenden und an ihren Längskanten mit den Längsseiten 7,8 zusammentreffenden Außenseite 9 sowie eine zur Außenseite 9 gegenüberliegende Innenseite 10 auf, die der Radfelge 2 des Schienenrads 1 zugeordnet ist.

Jeweils angrenzend an die Stirnseiten 5,6 ist an der Außenseite 9 der elastischen Körper 4',4" jeweils ein Endabschnitt 11,12 ausgebildet, der jeweils in einem kontinuierlich sprungfrei gekrümmten Hang 13,14 in ein von den Endabschnitten 11,12 begrenztes Tal 15 übergeht.

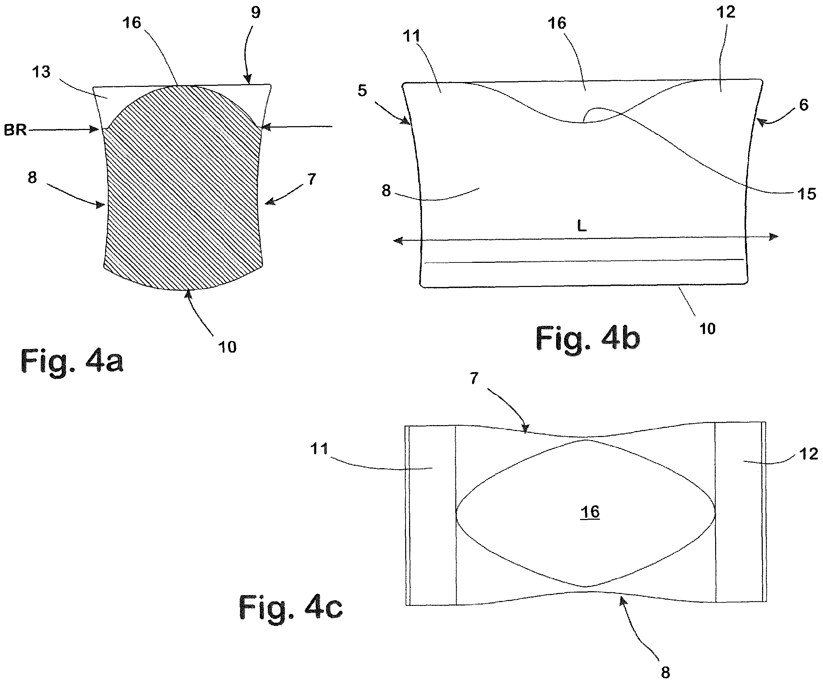

Vom Grund des Tals 15 ausgehend ist ein Formelement 16 in Form eines sich in Längsrichtung L des jeweiligen elastischen Körpers 4',4" erstreckenden Vorsprungs ausgebildet. Das Formelement 16 weist dabei die Form eines Halbzylinders mit einer halbkreisförmigen Querschnittsform auf (Fig. 4) und nimmt bis auf ein geringes Untermaß die Breite BR des elastischen Körpers 4',4" im Bereich des tiefsten Punkts des Tals 15 ein.

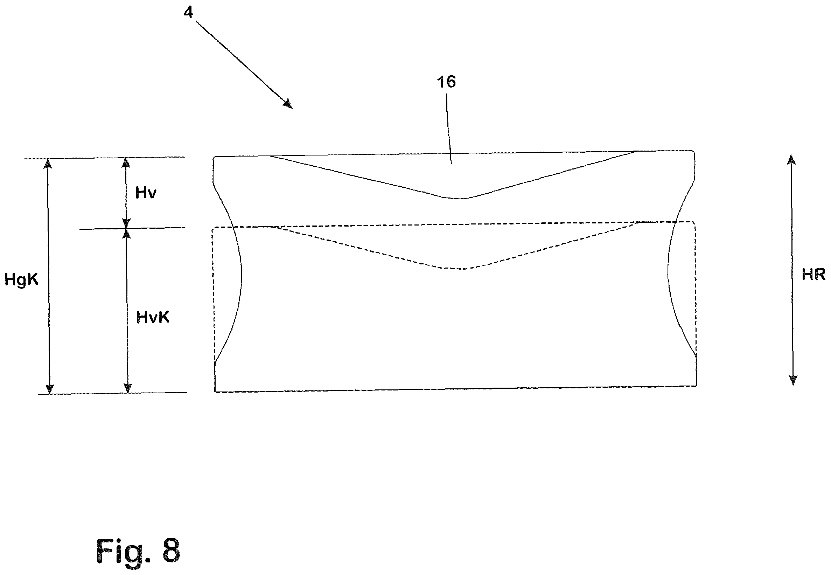

Bei der Montage werden die elastischen Körper 4 in Höhenrichtung HR komprimiert, so dass ihre Höhe HvK im fertig montierten Zustand um einen Höhenbetrag Hv geringer ist als ihre Höhe HgK im unkomprimierten Neuzustand (Fig. 8). Unabhängig davon, welche Variante 4',4" verbaut wird, beträgt die Höhe HvK der fertig montierten elastischen Körpers 4 etwa 71 - 93 % der Höhe HgK (Hv = 0,07 ... 0,29 HgK).

Um bei dieser Komprimierung verdrängtes Material aufzunehmen und eine im Wesentlichen blockförmige Gestalt bei den fertig montierten elastischen Körpern 4 zu gewährleisten, sind bei der Variante 4" die Längsseiten 7,8 und die Stirnseiten 5,6 im Neuzustand jeweils leicht eingewölbt. In Folge des Verspannens werden dann die gemäß der Variante 4" gestalteten elastischen Körper 4 so verformt, dass ihre Längsseiten 7,8 und Stirnseiten 5,6 im Wesentlichen gerade und eben geformt sind und optimale Federeigenschaften gewährleistet sind.

Der Radreifen 3 ist aus einem hierfür in der Praxis bewährten Stahlwerkstoff geformt und weist eine Innenumfangsfläche 17 auf, die in zwei umlaufende Randbereiche 17',17" unterteilt ist. Die Randbereiche 17',17" laufen jeweils beginnend von der ihnen jeweils zugeordneten Stirnseite des Radreifens 3 spitzdachförmig aufeinander zu und treffen sich in der Mitte der in axialer Richtung AR gemessenen Länge LI der Innenumfangsfläche 17. In die so am Innenumfang der vom Radreifen 3 umschlossenen Öffnung 18 gebildete, um die Öffnung 18 umlaufende Erhebung sind in regelmäßigen Winkelabständen kehlenartige, nach Art einer Zylinderhalbschale geformte Ausnehmungen 19 eingeformt, die sich in Achsrichtung AR über die Länge LI der Innenumfangsfläche 17 erstrecken und deren Tiefe dabei so gewählt ist, dass die kehlenartigen Ausnehmungen 19 mit ihren stirnseitigen Enden nahe der jeweiligen Stirnseite des Radreifens 3 auslaufen.

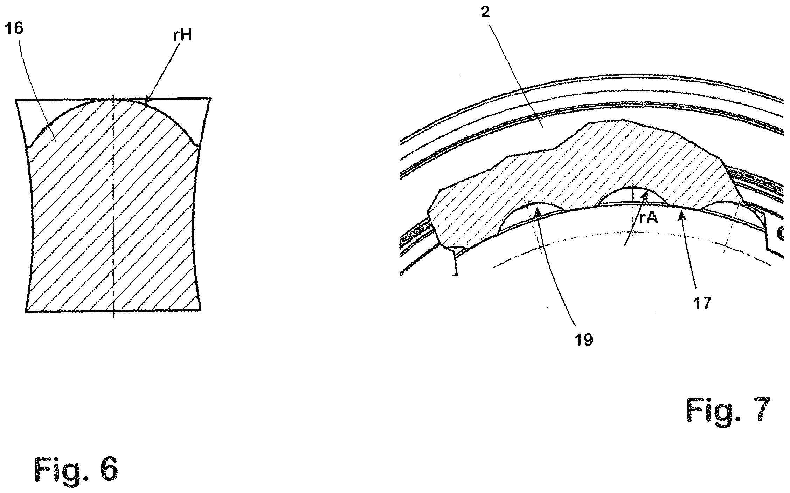

Der Querschnittsradius rH des an den elastischen Körpern 4 jeweils vorgesehenen Formelements 16 (Fig. 6) und der Querschnittsradius rA der Ausnehmung 19 sind dabei so aufeinander abgestimmt, dass sie die Bedingung $0,75 \, rA \leq rH \leq 0,98 \, rA$ erfüllen. Auf diese Weise besteht bei unkomprimierten elastischen Körpern 4 zwischen ihren Formelementen 16 und den Ausnehmungen 19 ein seitliches Spiel, das vom Material des Formelements gefüllt wird, wenn die elastischen Körper 4 zwischen dem Radreifen 3 und der Radfelge 2 verpresst werden.

An der Außenumfangsfläche 20 der Radfelge 2 sind in zur Anordnung der Ausnehmungen 19 korrespondierenden Winkelabständen Sitzflächen 21 ausgebildet.

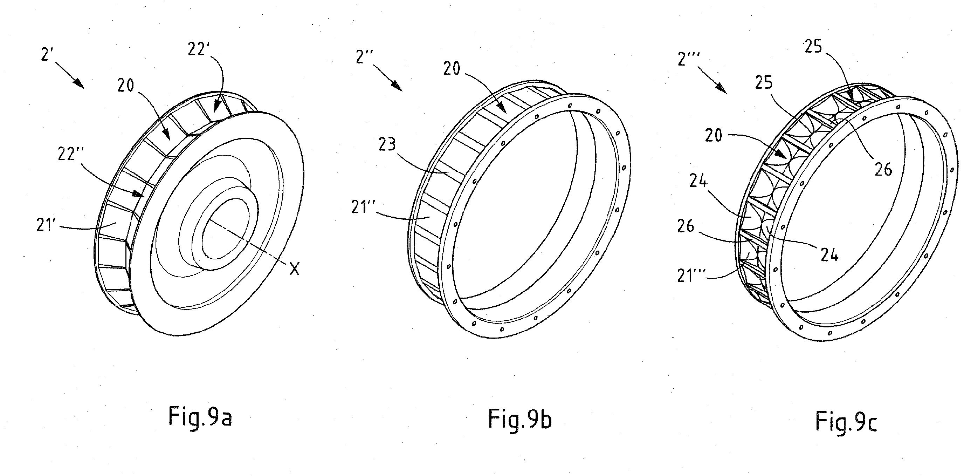

Bei der in Fig. 9a gezeigten Variante 2' der Radfelge 2 sind die Sitzflächen 21' als ebene Flächen ausgebildet, die jeweils in einer Kante aneinander stoßen, so dass die Außenumfangsfläche 20 bei dieser Variante 2' eine vieleckige Gestalt besitzt. Dabei sind die Außenumfangsflächen 20' und mit ihnen die Sitzflächen 21' in jeweils zwei Randbereiche 22',22" geteilt, die V-förmig in Richtung der Drehachse X des Schienenrads 1 aufeinander zulaufen.

Bei der in Fig. 9b gezeigten Variante 2" der Radfelge 2 sind die Sitzflächen 21" dagegen als achsparallel zur Drehachse X ausgerichtete ebene Flächen ausgebildet, die jeweils durch einen Kantenbereich 23 voneinander getrennt sind. Auch hier weist die Innenumfangsfläche 17 folglich eine vieleckige Gestalt auf.

Bei der in Fig. 9c gezeigten Variante 2‴ der Radfelge 2 sind die Sitzflächen 21‴ durch die Seitenflächen 24 von in das Material der Radfelge 2 eingeformten Ausnehmungen 25 ausgebildet. Die vier Seitenflächen 24 sind dabei derart geformt und ausgerichtet, dass sie ein räumliches, in das Material der Radfelge 2 gerichtetes Polygon bilden und gemeinsam die jeweilige Sitzfläche 21‴ bilden. Dabei sind die in Achsrichtung AR gegenüberliegend zueinander ausgerichteten Seitenflächen 24 eingewölbt, um einen möglichst sicheren und zentrierten Sitz des jeweiligen elastischen Körpers 4 auf der Sitzfläche 2‴ zu erzielen.

Zwischen den Ausnehmungen 25 sind bei der Variante 2‴ der Radfelge 2 jeweils Stege 26 vorgesehen, die sich achsparallel zur Drehachse X erstrecken und die Ausnehmungen 25 nach Art von Fächern umgrenzen. Die Stege 26 bilden auf diese Weise Anschläge, durch die die in den Ausnehmungen 25 jeweils sitzenden elastischen Körper 4 in Axialrichtung AR und Umfangsrichtung UR festgelegt sind.

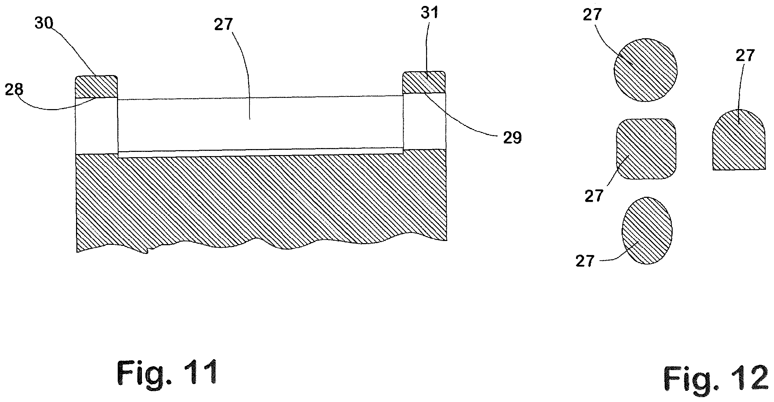

Alternativ können die Stege auch durch als Begrenzungselemente 27 dienende Steckbolzen gebildet werden, die durch als Durchgangsöffnungen ausgebildete Ausnehmungen 28,29 gesteckt werden, um in die stirnseitigen Ränder der Außenumfangsfläche 20 umlaufende Schultern 30,31 gesteckt zu werden. Die Begrenzungselemente 27 sind dabei optimalerweise so geformt, dass sie eine minimierte Kerbwirkung im Bereich ihrer Kontaktfläche mit den jeweils an ihnen abgestützten elastischen Körpern 4 aufweisen. Hierzu können sie eine abgerundete, kreisförmige oder ellipsoide Querschnittsform besitzen (Fig. 12).

Werden bei den bekannten Schienenradkonstruktionen B054, BO84, BO2000 und BO06 (s. Figuren 10a - 10d) die Radfelgen, die Radreifen und die elastischen Körper in der voranstehend erläuterten, erfindungsgemäßen Weise umkonstruiert, so lässt sich eine Verminderung der Federsteifigkeit um bis zu 60 % bei unverändert hoher Sicherheit gegen ein in Umfangsrichtung erfolgendes Verdrehen des Radreifens relativ zur Radfelge erzielen.

**BEZUGSZEICHEN**

| | |
|---|---|
| 1 | Schienenrad |
| 2 | Radfelge |
| 2',2",2‴ | Varianten der Radfelge 2 |
| 3 | Radreifen |
| 4 | elastische Körper |
| 4',4" | Varianten der elastischen Körper 4 |
| 5,6 | Stirnseiten des elastischen Körpers 4 |
| 7,8 | Längsseiten des elastischen Körpers 4 |
| 9 | Außenseite des elastischen Körpers 4 |
| 10 | Innenseite des elastischen Körpers 4 |
| 11,12 | Endabschnitte des elastischen Körpers 4 |
| 13,14 | Hänge des elastischen Körpers 4 |
| 15 | Tal |
| 16 | Formelement (Vorsprung) |
| 17 | Innenumfangsfläche |
| 17',17" | umlaufende Randbereiche der Innenumfangsfläche 17 |
| 18 | vom Radreifen 3 umschlossene Öffnung |
| 19 | Ausnehmungen |
| 20 | Außenumfangsfläche der Radfelge 2 |
| 21 | Sitzflächen |
| 21',21",21‴ | Varianten der Sitzfläche 21 |
| 22',22" | Randbereiche |
| 23 | Kantenbereich |
| 24 | Seitenflächen |
| 25 | Ausnehmungen (Vertiefungen) |
| 26 | Stege |
| 27 | Begrenzungselemente |
| 28,29 | Ausnehmungen |
| 30,31 | Schultern |
| AR | axiale Richtung |
| BR | Breite des elastischen Körpers 4 |
| EK | elastischer Körper |
| RR | Radreifen |
| RF | Radfelge |
| HR | Höhenrichtung |
| HvK | Höhe des elastischen Körpers 4 im fertig montierten Zustand |
| Hv | Höhenbetrag |
| HgK | Höhe des elastischen Körpers 4 im unkomprimierten Neuzustand |
| L | Längsrichtung des elastischen Körpers 4 |
| LI | Länge der Innenumfangsfläche 17 |
| rA | Querschnittsradius der Ausnehmung 19 |
| rH | Querschnittsradius des Formelements 16 |
| UR | Umfangsrichtung |
| X | zentrale Drehachse des Schienenrads 1 |

**Patentansprüche**

1. Mehrteiliges Schienenrad mit einem Radreifen (3), mit einer Radfelge (2) und mit mindestens zwei zwischen dem Radreifen (3) und der Radfelge (2) angeordneten elastischen Körpern (4), über die der Radreifen (3) federnd elastisch auf der Radfelge (2) abgestützt ist und die in Umfangsrichtung (UR) um die Drehachse (X) des Schienenrads (1) verteilt angeordnet sind, wobei die elastischen Körper (4) zwischen einer Innenumfangsfläche (17) des Radreifens (3) und einer Außenumfangsfläche (20) der Radfelge (2) eingespannt sind und dabei mit ihrer dem Radreifen (3) zugeordneten Außenseite (9) an der Innenumfangsfläche (17) des Radreifens (3) und mit ihrer der Radfelge (2) zugeordneten Innenseite (10) an der Außenumfangsfläche (20) der Radfelge (2) anliegen, **dadurch gekennzeichnet, dass** die elastischen Körper (4) gegen eine Bewegung in Umfangsrichtung (UR) durch an der Innenumfangsfläche (17) des Radreifens (3) und/oder an der Außenumfangsfläche (20) der Radfelge (2) jeweils vorgesehene Formelemente (19,21,26,27) gesperrt sind, indem eine Anzahl der elastischen Körper (4) an ihrer Außenseite (9) oder Innenseite (10) mindestens ein Formelement (16) aufweisen, das mindestens in Umfangsrichtung (UR) formschlüssig mit einem der an der Innenumfangsfläche (17) des Radreifens (3) oder der Außenumfangsfläche (20) der Radfelge (2) vorhandenen Formelemente (19) zusammenwirkt.

2. Schienenrad nach Anspruch 1, **dadurch gekennzeichnet, dass** - in Umfangsrichtung (UR) betrachtet - zwischen zwei mit einem der in Anspruch 2 genannten Formelemente (16) versehenen elastischen Körpern (4) jeweils mindestens ein elastischer Körper angeordnet ist, bei dem ein solches Formelement fehlt.

3. Schienenrad nach einem der Ansprüche 1 oder 2, **dadurch gekennzeichnet, dass** mindestens 20 % der elastischen Körper (4) an ihrer Außenseite (9) mit einem der in Anspruch 1 genannten Formelemente (16) versehen sind.

4. Schienenrad nach einem der voranstehenden Ansprüche, **dadurch gekennzeichnet, dass** die an der Innenumfangsfläche (17) des Radreifens (3) vorgesehenen Formelemente (19) in die Innenumfangsfläche (17) eingeformte Ausnehmungen sind und jeweils mindestens ein formschlüssig mit einer dieser Ausnehmungen (19) zusammenwirkender Vorsprung (16) als Formelement an der Außenseite (9) der mit einem solchen Formelement (16) versehenen elastischen Körper (4) vorhanden ist.

5. Schienenrad nach einem der voranstehenden Ansprüche, **dadurch gekennzeichnet, dass** an der Außenumfangsfläche (20) der Radfelge (2) Sitzflächen (21) für die elastischen Körper (4) ausgebildet sind.

6. Schienenrad nach Anspruch 5, **dadurch gekennzeichnet, dass** die Sitzflächen (21) durch Stege (26) begrenzt sind, die achsparallel zur Drehachse (X) des Schienenrads (1) ausgerichtet sind.

7. Schienenrad nach Anspruch 6, **dadurch gekennzeichnet, dass** die Stege (26) durch an der Radfelge (2) gehaltene Begrenzungselemente (27) gebildet sind.

8. Schienenrad nach einem der Ansprüche 5 bis 7, **dadurch gekennzeichnet, dass** die Sitzflächen (21) in in die Außenumfangsfläche (20) der Radfelge (2) eingeformten Vertiefungen (25) angeordnet sind.

9. Schienenrad nach Anspruch 8, **dadurch gekennzeichnet, dass** die Vertiefungen (25) durch Seitenflächen (24) begrenzt sind, die ein räumliches Polygon bilden und gemeinsam die jeweilige Sitzfläche (21) bilden.

10. Schienenrad nach einem der Ansprüche 8 oder 9, **dadurch gekennzeichnet, dass** die die Vertiefungen (25) begrenzenden Seitenflächen (24) eingewölbt sind.

11. Schienenrad nach einem der voranstehenden Ansprüche, **dadurch gekennzeichnet, dass** die Höhe (HvK) der elastischen Körper (4) im zwischen Radreifen (3) und Radfelge (2) eingespannten Zustand um 7 - 29 % geringer ist als ihre Höhe (HgK) im vollständig entlasteten Neuzustand.

12. Schienenrad nach einem der voranstehenden Ansprüche,
**dadurch gekennzeichnet, dass** die elastischen Körper (4) aus einem Elastomerwerkstoff mit einer Shorehärte von 65 bis 89 ShA bestehen.

13. Schienenrad nach einem der voranstehenden Ansprüche, **dadurch gekennzeichnet, dass** der elastische Körper (4) an seinen jeweils achsparallel zur Drehachse (X) des Schienenrads (1) ausgerichteten Achsrichtung (AR) betrachtet gegenüberliegenden Enden jeweils einen Endabschnitt (11,12) aufweist und **dass** zwischen den Endabschnitten (11,12) in die Außenseite (9) des elastischen Körpers (4) ein Tal (15) eingeformt ist, auf dessen Grund ein das Formelement (16) des elastischen Körpers (4) bildender Vorsprung (16) errichtet ist.

14. Schienenrad nach Anspruch 13, **dadurch gekennzeichnet, dass** sich der Vorsprung (16) in Achsrichtung (AR) zwischen den Endabschnitten (11,12) des jeweiligen elastischen Körpers (4) erstreckt.

15. Schienenrad nach einem der Ansprüche 13 oder 14, **dadurch gekennzeichnet, dass** der Vorsprung (16) in einem Schnitt quer zur Achsrichtung (AR) betrachtet halbkreisförmig ausgebildet ist.

16. Schienenrad nach einem der Ansprüche 13 bis 15, **dadurch gekennzeichnet, dass** die Hänge (13,14), mit denen die Endabschnitte (11,12) in das zwischen ihnen begrenzte Tal (15) übergehen, kontinuierlich sprungfrei gekrümmt sind.

17. Schienenrad nach einem der Ansprüche 13 bis 16, **dadurch gekennzeichnet, dass** seine Längsseiten (7,8) eingewölbt sind.

**Claims**

1. Multi-part rail wheel with a wheel tyre (3), with a wheel rim (2) and with at least two elastic bodies (4) arranged between the wheel tyre (3) and the wheel rim (2), via which the wheel tyre (3) is supported on the wheel rim (2) in an elastically resilient manner and which are arranged distributed in the circumferential direction (UR) around the axis of rotation (X) of the rail wheel (1), wherein the elastic bodies (4) are clamped between an inner circumferential surface (17) of the wheel tyre (3) and an outer circumferential surface (20) of the wheel rim (2) and thereby rest against the inner circumferential surface (17) of the wheel tyre (3) with their outer side (9) assigned to the wheel tyre (3) and against the outer circumferential surface (20) of the wheel rim (2) with their inner side (10) assigned to the wheel rim (2), **characterised in that** the elastic bodies (4) are locked against a movement in the circumferential direction (UR) by forming elements (19, 21, 26, 27) each provided on the inner circumferential surface (17) of the wheel tyre (3) and/or on the outer circumferential surface (20) of the wheel rim (2) by a number of the elastic bodies (4) having, on their outer side (9) or inner side (10), at least one forming element (16), which, at least in the circumferential direction (UR), cooperates in a form-fitting manner with one of the forming elements (19) present on the inner circumferential surface (17) of the wheel tyre (3) or on the outer circumferential surface (20) of the wheel rim (2).

2. Rail wheel according to claim 1, **characterised in that**, viewed in the circumferential direction (UR), at least one elastic body, in which such a forming element is missing, is in each case arranged between two elastic bodies (4) provided with one of the forming elements (16) mentioned in claim 2.

3. Rail wheel according to any one of claims 1 or 2, **characterised in that** at least 20% of the elastic bodies (4) are provided on their outer side (9) with one of the forming elements (16) mentioned in claim 1.

4. Rail wheel according to any one of the preceding claims, **characterised in that** the forming elements (19) provided on the inner circumferential surface (17) of the wheel tyre (3) are recesses formed into the inner circumferential surface (17) and in each case at least one projection (16) cooperating in a form-fitting manner with one of these recesses (19) is present as a forming element on the outer side (9) of the elastic bodies (4) provided with such a forming element (16).

5. Rail wheel according to any one of the preceding claims, **characterised in that** seating surfaces (21) for the elastic bodies (4) are designed on the outer circumferential surface (20) of the wheel rim (2).

6. Rail wheel according to claim 5, **characterised in that** the seating surfaces (21) are delimited by webs (26) which are aligned axially parallel to the axis of rotation (X) of the rail wheel (1).

7. Rail wheel according to claim 6, **characterised in that** the webs (26) are formed by delimiting elements (27) held on the wheel rim (2).

8. Rail wheel according to any one of claims 5 to 7, **characterised in that** the seating surfaces (21) are arranged in depressions (25) formed into the outer circumferential surface (20) of the wheel rim (2).

9. Rail wheel according to claim 8, **characterised in that** the depressions (25) are delimited by side surfaces (24) which form a spatial polygon and together form the respective seating surface (21).

10. Rail wheel according to any one of claims 8 or 9, **characterised in that** the side surfaces (24) delimiting the depressions (25) are arched.

11. Rail wheel according to any one of the preceding claims, **characterised in that** the height (HvK) of the elastic bodies (4) in the state clamped between wheel tyre (3) and wheel rim (2) is 7-29% lower than their height (HgK) in a completely relieved new state.

12. Rail wheel according to any one of the preceding claims, **characterised in that** the elastic bodies (4) consist of an elastomer material with a Shore hardness of 65 to 89 ShA.

13. Rail wheel according to any one of the preceding claims, **characterised in that** the elastic body (4) has, at its opposing ends respectively viewed in the axial direction (AR) aligned axis-parallel to the axis of rotation (X) of the rail wheel (1), an end section (11, 12) in each case and that a valley (15) is formed into the outer side (9) of the elastic body (4) between the end sections (11, 12), on the base of which valley is constructed a projection (16) forming the forming element (16) of the elastic body (4).

14. Rail wheel according to claim 13, **characterised in that** the projection (16) extends in the axial direction (AR) between the end sections (11, 12) of the respective elastic body (4).

15. Rail wheel according to any one of claims 13 or 14, **characterised in that** the projection (16) is formed in a semicircular manner viewed in a section transverse to the axial direction (AR).

16. Rail wheel according to any one of claims 13 to 15, **characterised in that** the slopes (13, 14), with which the end sections (11, 12) merge into the valley (15) delimited between them, are continuously curved without jumps.

17. Rail wheel according to any one of claims 13 to 16, **characterised in that** its longitudinal sides (7, 8) are arched.

**Revendications**

1. Roue ferroviaire en plusieurs parties, comprenant un bandage de roue (3), une jante de roue (2) et au moins deux corps élastiques (4) disposés entre le bandage de roue (3) et la jante de roue (2), par le biais desquels le bandage de roue (3) est supporté avec élasticité de ressort sur la jante de roue (2) et qui sont disposés répartis dans le sens périphérique (UR) autour de l'axe de rotation (X) de la roue ferroviaire (1), les corps élastiques (4) étant encastrés entre une surface périphérique intérieure (17) du bandage de roue (3) et une surface périphérique extérieure (20) de la jante de roue (2) et reposent ici avec leur côté extérieur (9), associé au bandage de roue (3), contre la surface périphérique intérieure (17) du bandage de roue (3) et avec leur côté intérieur (10), associé à la jante de roue (2), contre la surface périphérique extérieure (20) de la jante de roue (2), **caractérisée en ce qu'**un mouvement des corps élastiques (4) dans le sens périphérique (UR) est bloqué par des éléments façonnés (19, 21, 26, 27) respectivement prévus sur la surface périphérique intérieure (17) du bandage de roue (3) et/ou sur la surface périphérique extérieure (20) de la jante de roue (2), **en ce qu'**un certain nombre des corps élastiques (4) présentent, sur leur côté extérieur (9) ou leur côté intérieur (10), au moins un élément façonné (16) qui, au moins dans le sens périphérique (UR), est en liaison par complémentarité de forme avec l'un des éléments façonnés (19) présents sur la surface périphérique intérieure (17) du bandage de roue (3) ou sur la surface périphérique extérieure (20) de la jante de roue (2).

2. Roue ferroviaire selon la revendication 1, **caractérisée en ce que**, considéré dans le sens périphérique (UR), au moins un corps élastique, sur lequel un tel élément façonné est absent, est disposé entre deux corps élastiques (4) pourvus d'un des éléments façonnés (16) mentionnés dans la revendication 2.

3. Roue ferroviaire selon l'une des revendications 1 ou 2, **caractérisée en ce qu'**au moins 20 % des corps élastiques (4) sont pourvus sur leur côté extérieur (9) d'un des éléments façonnés (16) mentionnés dans la revendication 1.

4. Roue ferroviaire selon l'une des revendications précédentes, **caractérisée en ce que** les éléments façonnés (19) prévus sur la surface périphérique intérieure (17) du bandage de roue (3) sont des évidements conçus dans la surface périphérique intérieure (17) et **en ce qu'**il existe respectivement au moins une saillie (16) coopérant avec l'un de ces évidements (19) en tant qu'élément façonné sur le côté extérieur (9) des corps élastiques (4) pourvus d'un tel élément façonné (16).

5. Roue ferroviaire selon l'une des revendications précédentes, **caractérisée en ce que** des surfaces d'appui (21) sont conçues pour les corps élastiques (4) sur la surface périphérique extérieure (20) de la jante de roue (2),

6. Roue ferroviaire selon la revendication 5, **caractérisée en ce que** les surfaces d'appui (21) sont délimitées par des entretoises (26) parallèles à l'axe de rotation (X) de la roue ferroviaire (1).

7. Roue ferroviaire selon la revendication 6, **caractérisée en ce que** les entretoises (26) sont formées par des éléments de délimitation (27) maintenus sur la jante de roue (2).

8. Roue ferroviaire selon l'une des revendications 5 à 7, **caractérisée en ce que** les surfaces d'appui (21) sont disposées dans des cavités (25) formées dans la surface circonférentielle extérieure (20) de la jante de roue (2).

9. Roue ferroviaire selon la revendication 8, **caractérisée en ce que** les cavités (25) sont délimitées par des surfaces latérales (24) formant un polygone spatial et constituant ensemble la surface d'appui (21) respective.

**10.** Roue ferroviaire selon l'une des revendications 8 ou 9, **caractérisée en ce que** les surfaces latérales (24) délimitant les cavités (25) sont voûtées.

**11.** Roue ferroviaire selon l'une des revendications précédentes, **caractérisée en ce que** la hauteur (HvK) des corps élastiques (4) à l'état serré entre le bandage de roue (3) et la jante de roue (2) est de 7 à 29 % inférieure à leur hauteur (HgK) à l'état neuf complètement déchargé.

**12.** Roue ferroviaire selon l'une des revendications précédentes, **caractérisée en ce que** les corps élastiques (4) sont composés d'un matériau élastomère d'une dureté shore de 65 à 89 ShA.

**13.** Roue ferroviaire selon l'une des revendications précédentes, **caractérisée en ce que** le corps élastique (4) présente, sur chacune de ses extrémités opposées, considérées dans la direction axiale (AR) parallèle à l'axe de rotation (X) de la roue ferroviaire (1), respectivement une section d'extrémité (11, 12) et **en ce qu'**un vallon est conçu entre les sections d'extrémité (11, 12) dans le côté extérieur (9) du corps élastique (4), sur le fond duquel est érigée une saillie (16) formant l'élément façonné (16) du corps élastique (4).

**14.** Roue ferroviaire selon la revendication 13, **caractérisée en ce que** la saillie (16) s'étend dans la direction axiale (AR) entre les sections d'extrémité (11, 12) du corps élastique (4) respectif.

**15.** Roue ferroviaire selon l'une des revendications 13 ou 14, **caractérisée en ce que** la saillie (16) présente une forme semi-circulaire considérée en une coupe transversale par rapport à la direction axiale (AR).

**16.** Roue ferroviaire selon l'une des revendications 13 à 15, **caractérisée en ce que** les pentes (13, 14) avec lesquelles les sections d'extrémité (11, 12) pénètrent dans la vallée (15) délimitée par elles sont courbes en continu sans interruption.

**17.** Roue ferroviaire selon l'une quelconque des revendications 13 à 16, **caractérisée en ce que** ses côtés longitudinaux (7,8) sont voûtés.

Fig. 1

EP 3 582 975 B1

Fig. 2

Fig. 3

EP 3 582 975 B1

Fig. 4a

Fig. 4b

Fig. 4c

Fig. 5

Fig. 7

Fig. 6

Fig. 8

EP 3 582 975 B1

Fig.9a          Fig.9b          Fig.9c

EP 3 582 975 B1

Bo54

RF

EK

RR

**Fig. 10a**

Bo84

RF

EK

RR

**Fig. 10b**

Bo2000

RF

EK

RR

**Fig. 10c**

Bo06

RF

EK

RR

**Fig. 10d**

EP 3 582 975 B1

**Fig. 11**

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014222072 A1
- DE 829603 C
- DE 3328321 A1
- EP 0733493 B1
- US 2328660 A
- EP 1896274 B1